# EUROPEAN PATENT APPLICATION

(11) **EP 2 193 734 A1**
(43) Date of publication of application: **09.06.2010**
(21) Application number: 08170777.0
(22) Date of filing: 05.12.2008
(51) Int. Cl.: A47J 43/07, A47J 43/08

(54) **Coupling assembly, kitchen appliance and hand blender**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A hand blender is provided that comprises a housing (2) for housing a drive motor (7), the drive motor being arranged to drive a drive shaft. The drive shaft is constructed to engage a drive part of a tool member. Further the hand mixing device comprises a coupling assembly (20) arranged to detachably couple the housing to the tool member so as to bring the drive shaft into engagement with the drive part of the tool member. The coupling assembly comprises two separate and independently spring loaded retaining members (21, 22), provided diametrically opposite to each other on one of the housing and the tool member, said retaining members being moveable between a coupling and a non-coupling position by exerting pressure thereon.

## Description

### FIELD OF THE INVENTION

The present invention relates to kitchen appliances in general and in particular to handheld mixing devices or hand blenders. More in particular the present invention relates to hand blenders which are provided with exchangeable tool members, which tool members can be coupled to a housing of the hand blender by means of a coupling assembly.

### BACKGROUND OF THE INVENTION

Hand mixing devices or hand blenders having exchangeable tool members are generally available. Such hand blenders generally comprise a housing for housing a drive motor and operating switches. These hand blenders can be powered by the mains or can be powered by means of (rechargeable) batteries. The hand blenders can be coupled to different tool members which are each designed and arranged for specific jobs, such as mixing, cutting, stirring etcetera. In order to conveniently couple the tool members to the housing of the hand blender, a coupling assembly is provided that is for example capable of establishing a notching coupling between the housing and the tool member.

European patent publication EP 1 138 239 B1 describes a mixing device in the form of a hand mixer having a motor housing to which a tool can be coupled. The tool is coupled to the housing by means of a retaining element that can engage a retaining groove. The retaining element is made from a single piece of a resilient material, in particular a plastics material. The retaining element comprises two pushbuttons on which pressure can be exerted so as to spread the retaining element and to release the tool from the housing. The pushbuttons of the retaining element are interconnected by means of two connecting arms that are integral with the pushbuttons and which provide the resilient force that establishes the coupling between the tool and the housing. The pushbuttons extend through opening in the outer surface of the housing of the hand mixer. The retaining element as described in EP 1 138 239 B1 has as substantial circular shape and is arranged to encompass the drive shaft of the hand mixer.

A concern of the hand mixer of EP 1 138 239 B1 is that the two pushbuttons that actuate the retaining element mutually influence each other when the tool is to be coupled to or decoupled from the hand mixer. This is due to the fact that the pushbuttons are interconnected by means of two connecting arms that are integral with the pushbuttons. When operating the pushbuttons, these will have to be operated both at the same time and with equal pressure in order to function properly.

Furthermore it has been found, that a relatively high pressure must be exerted on the pushbuttons by a user in order to operate the retaining element, as both connecting arms must be deformed in order to allow the retaining element to spread sufficiently far enough when decoupling the tool from the hand mixer.

Also, coupling and decoupling of the tool with the known hand mixer is in light of the abovementioned drawbacks hard to control as the movement of both pushbuttons must be coordinated to take place simultaneously while exerting said relatively high pressure.

### OBJECT OF THE INVENTION

It would therefore be desirable to provide a coupling assembly arranged to detachably couple a housing of a hand blender with a tool member, that is easy to operate and to control while the force of operation thereof is relatively low.

### SUMMARY OF THE INVENTION

To better address one or more of these concerns, a coupling assembly is provided that is arranged to detachably couple a housing of a hand blender with a tool member. The coupling assembly comprises a first and a second spring loaded retaining member, said retaining members each comprising first coupling means, whereby said retaining members are provided on one of the housing and the tool member. The retaining members are moveable with respect to one of the housing and the tool member between a coupling and non-coupling position by exerting pressure on said retaining members. The coupling assembly further comprises second coupling means complementary with the first coupling means and which are arranged to establish a coupling with the first coupling means, said second coupling means being provided on the other of the housing and the tool member. Said retaining members are separate members which are each spring loaded by a separate spring member so as to be independently moveable with respect to each other. This achieves the effect, that the retaining members do not influence each other when a user operates them, yielding better control. Furthermore, as both retaining members are separately spring loaded, the actual spring load can be properly chosen such that the spring load is just sufficient to keep the retaining members in a coupled state, allowing a relatively low operating force.

In an embodiment the first and second coupling means are complementary lug-and-hole coupling means acting between the housing and the tool member. This yields a secure way of coupling the housing with the tool member.

In an embodiment the lug-and-hole coupling means of the first coupling means each comprise a notching hook, and wherein the lug-and-hole coupling means of the second coupling means each comprise a notching recess arranged to receive said corresponding notching hook. Complementary lug-and-hole coupling means, in particular those comprising notching hooks and notching recesses have proven easy to manufacture and to provide a solid coupling between the housing and the tool member.

In an embodiment said separate spring members comprise a compression spring, which provides a spring load that can be easily adjusted to meet the user's needs and provides an easy to manufacture coupling assembly.

In an embodiment the retaining members each comprise a pushbutton that is integrally connected therewith which provides ease of use of the coupling assembly, in particular provides an easy means to exert pressure on the retaining means.

In an embodiment the retaining members each comprise a lever extending in a longitudinal direction thereof, said lever comprising a free connection end that is hingedly connectable to one of the housing and the tool member. In this manner operation of the retaining member will be improved. Furthermore, a certain movement of the retaining member can be guaranteed and no elaborate guide means have to be provided for the retaining members as the retaining members, at least partly, hinge by means of the lever.

In an embodiment the lever and the notching hook of the respective retaining member extend in opposite directions from the pushbutton of said respective retaining member, so that a minor hinging movement about the lever will have a maximized movement of the notching hook.

In an embodiment the first and second spring loaded retaining members are provided on the housing, which provides an easier to clean tool member as the tool member comprises the least amount of moveable elements.

In an embodiment the retaining members are mounted to the housing in a longitudinal direction of the housing, which highly improves the manufacturability, in particular the assembly, of the housing of the hand blender. In fact, a further concern of the hand mixer of EP 1 138 239 B1 is that the retaining element of EP 1 138 239 B1 has as substantial circular shape and is arranged to encompass the drive shaft of the hand mixer. This means that mounting thereof in the housing will require (plastic) deformation of the two connecting arms that are integral with the pushbuttons against their resilient force. The embodiment of the invention does not require any (plastic) deformation of the retaining members, which can easily be mounted in the housing. This reduces the costs of manufacture and assembly of the hand mixer.

In an embodiment the first and second spring loaded retaining members are identical, which further reduces the costs for manufacture and improves ease of assembly.

In an embodiment the spring load on the retaining members is adjustable, such that the user's needs or preferences can be met with respect to the amount of force required to operate the coupling assembly. Furthermore, it is possible to adjust the spring load to compensate for a reduction of the spring load over time, increasing the life span of the coupling assembly.

According to a further aspect a hand blender is provided that comprises a housing for housing a drive motor, the drive motor being arranged to drive a drive shaft. The drive shaft being constructed to engage a drive member of a tool member. The hand blender further comprises a coupling assembly arranged to detachably couple the housing to the tool member so as to bring the drive shaft into engagement with the drive member of the tool member. The coupling assembly comprises two separate and independently spring loaded retaining members, provided diametrically opposite to each other on one of the housing and the tool member, said retaining members being moveable between a coupling and a non-coupling position by exerting pressure thereon.

Preferably the retaining members each comprise a lever extending in a longitudinal direction of one of the housing and the tool member, said lever comprising a free connection end that is hingedly connectable to one of the housing and the tool member.

### BRIEF DESCRIPTION OF THE DRAWINGS

Further advantageous embodiments of the coupling assembly, a kitchen appliance provided with the coupling assembly and a hand blender according to the invention are described in the claims and in the following description with reference to the drawing, in which:
Fig. 1A depicts a side elevation of a hand blender with a first tool member coupled to the blender housing;
Fig. 1B depicts a side elevation of the hand blender of Figure 1A now coupled with a second tool member;
Fig. 1C depicts a side elevation of the hand blender of Figure 1A now coupled with a third tool member;
Fig. 2 depicts a partial open perspective view of an interior of a housing of the hand blender of Fig. 1 with part of a coupling assembly;
Fig. 3 depicts in a cross-sectional view along a longitudinal axis thereof, the housing with a tool member coupled thereto;
Fig. 4 depicts the tool member of Figure 3 having an alternative retaining member, and
Fig. 5 depicts a partial open perspective view of the hand blender of Figure 2 having only a single retaining member.

### DETAILED DESCRIPTION OF EXAMPLES

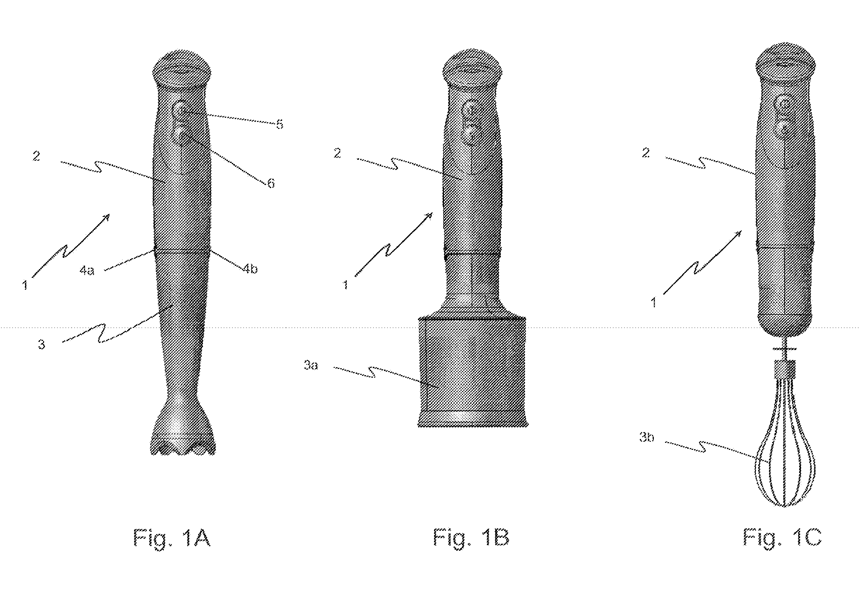

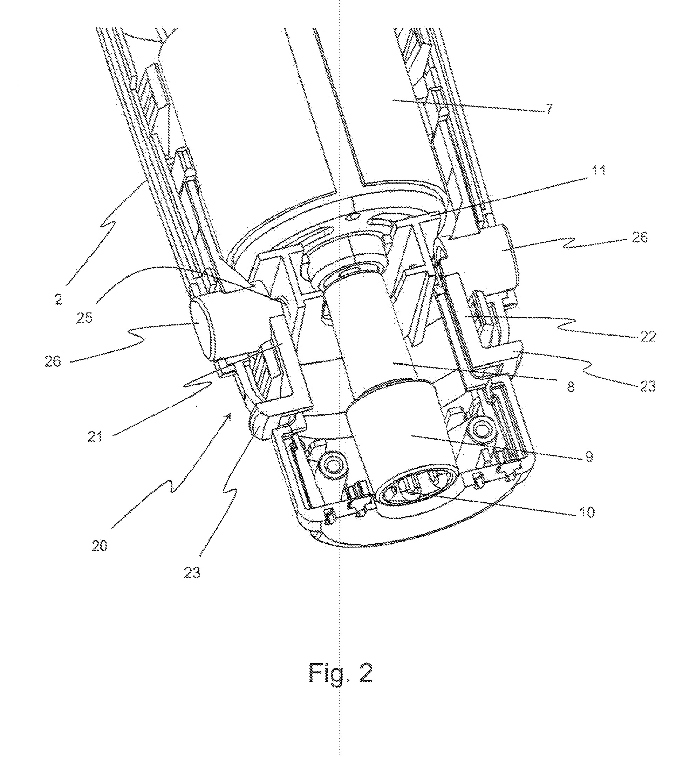

Figure 1A presents a side view of hand mixing device or hand blender 1. The hand blender 1 comprises a housing 2 and a tool member 3 that is coupled to the housing 2 by means of a coupling assembly (not visible). The housing 2 houses a (not-shown) motor for driving the tool member 3. The hand blender 1 is generally used as a kitchen appliance and can be used in the preparation of food. The tool member 3 is detachably coupled to the housing 2 by means of a coupling assembly, which will be described in more detail with reference to Figure 2, and of which two pushbuttons 4a and 4b, with which decoupling of the tool member 3 and the housing 2 can be effected, are just visible. The housing 2 of the hand blender 1 further comprises control buttons 5, 6 with which a user can turn on and off the hand blender 1, and for example can control the speed of the hand blender 1.

In the example of Figure 1A the tool member 3 is a so-called bar blender, however other tool members having different functions can also be coupled to the housing 2 by means of the coupling assembly. Figures 1B and 1C give examples of two such other tool members 3a, 3b, which are also known as a chopper and a beater or whisk

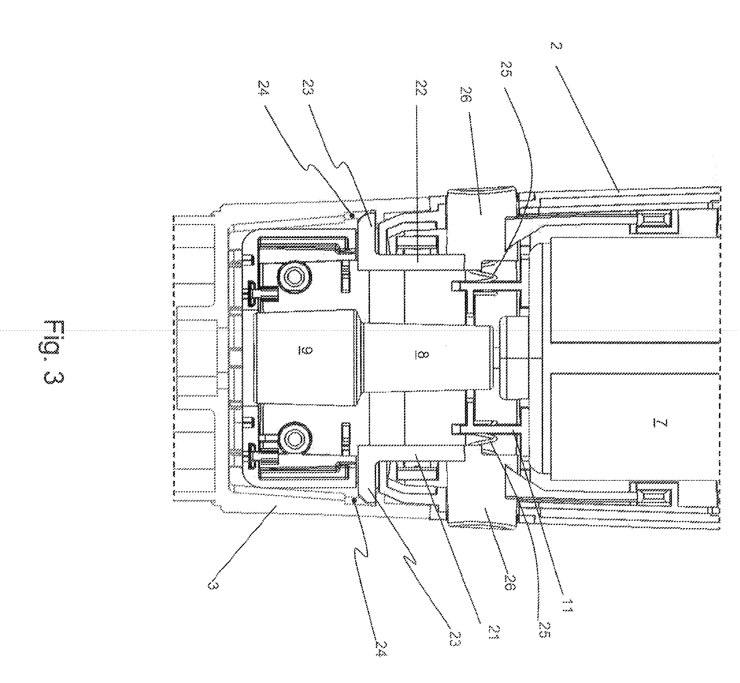

As indicated, the tool member 3 can be detachably coupled to the housing 2 of the hand blender 1 by means of a dedicated coupling assembly. With reference to Figure 2 together with Figure 3 this is explained in more detail.

Figure 2 and Figure 3 show part of the housing 2 in an opened perspective view in which the interior of the housing is visible and said part of said housing 2 in a cross-sectional view respectively. In the latter it is also shown that a tool member 3 is coupled to the housing 2, where only part of the tool member 3 is visible.

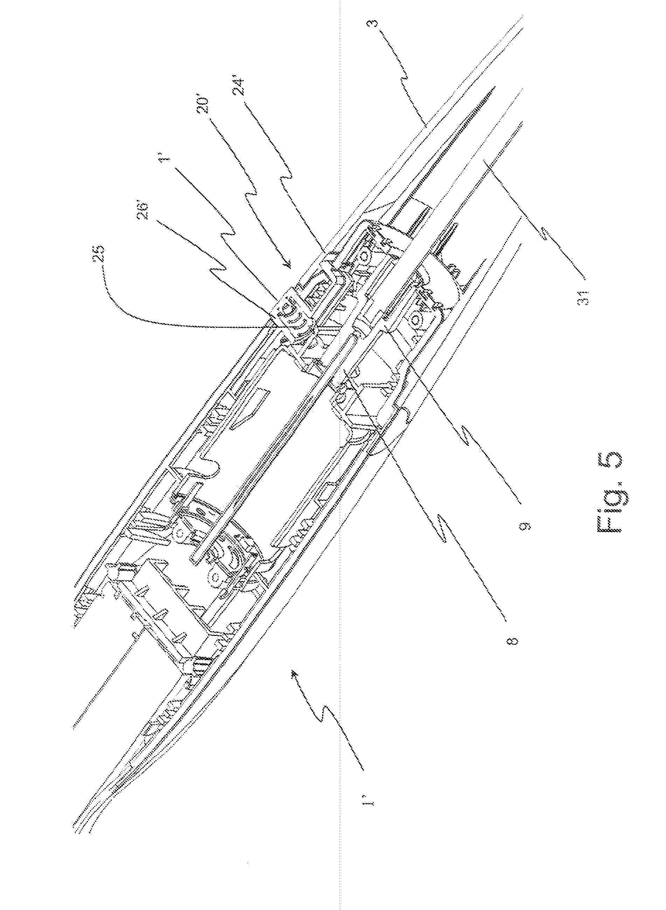

As can be seen the housing 2 houses an electrical drive motor 7 which is coupled to and arranged for driving a drive shaft 8. The drive motor 7 may be battery-powered or may be powered by the mains. The drive shaft 8 comprises a connector 9 which can establish a coupling with a drive part 31 (see Figure 5) of a tool member. Preferably, the connector 9 is designed as a tubular part in which the drive part of the tool member can be inserted. Further, the connector 9 is preferably provided with an internal toothing 10 that can engage a similar toothing on the drive part of the tool member. For ease of connection, the toothing 10 is provided with rounded edges. The drive motor 7 is supported, at least partially, by means of a support structure 11 through which the drive shaft 8 extends.

A coupling assembly, generally denoted with reference numeral 20, is provided that is arranged to detachably couple the housing 2 of the hand blender with the tool member 3. The coupling assembly 20 comprises a first spring loaded retaining member 21 and a second, identical spring loaded retaining member 22, both provided in the housing 2 and diametrically opposite of each other. It is noted however, that it is also possible that the retaining members 21, 22 are provided on the tool member 3. Here, the invention will however be described by means of the example that the retaining members are provided in the housing 2. The retaining members 21, 22 each comprise first coupling means 23 which are preferably designed as a notching hook.

The coupling assembly 20 further comprises second coupling means 24 (see Figure 3) which are complementary with the first coupling means 23. The second coupling means 24 are preferably designed as a notching recess that is arranged to couple with the respective notching hook 23. The notching hooks 23 and notching recesses 24 are designed such, that mutual rotation of the housing 2 and the coupled tool member 3 is prevented.

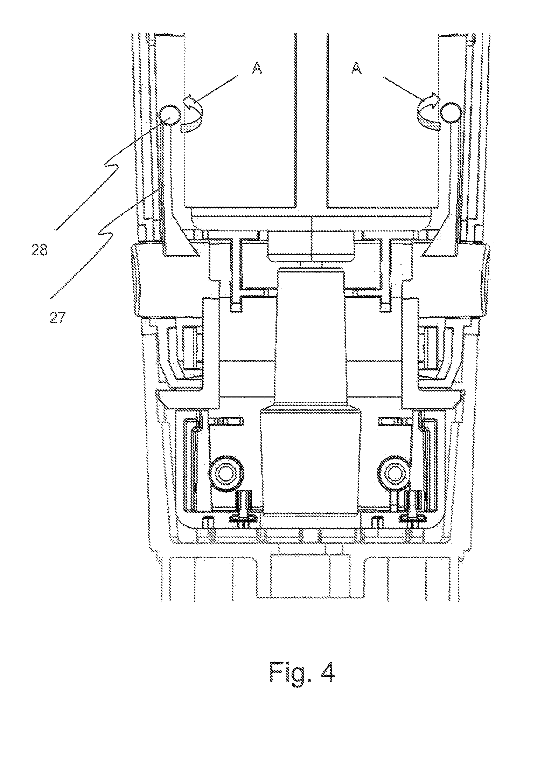

The retaining members 21, 22 are spring loaded against the support structure 11 by means of a resilient member, in particular a compression spring 25, whereby each retaining member 21, 22 is spring loaded by a single compression spring 25. The compression springs 25 are each separately and partly housed inside a blind bore of a pushbutton 26 that is integrally connected to the notching hook 23. It is to be understood that other types of springs are also conceivable, such as leaf springs or bodies of a resilient material such as (synthetic) rubber or a resilient foam. It is also possible to provide magnets that provide the required force that bias the retaining members 21, 22. An example of an alternative spring is shown with reference to Figure 4.

As can be seen in both Figure 2 and 3, the notching hooks 23 protrude through the housing 2 and extend beyond an outer surface thereof. In order to decouple the tool member 3 from the housing 2, a user can exert pressure on the retaining members 21, 22 by pushing on the pushbuttons 26 against the bias of the compression springs 25. This is indicated by means of arrows A in the drawing. By pushing on the pushbuttons 26 the retaining members 21, 22 together with the notching hooks 23 will be displaced inwardly with respect to the outer wall of the housing 2 and release from the notching recesses 24, such that the tool member 3 can be removed, i.e. decoupled, from the housing 2. This is indicated in the drawing by means of arrow B. The retaining members 21, 22 and therefore the notching hooks 23 are moveable with respect to the housing 2 between a coupling and non-coupling position.

The retaining members 21, 22 are separate members which are independently moveable with respect to each other and do not influence each other when operated by a user.

Preferably the retaining members 21, 22 are provided with a lever 27 which extends in longitudinal direction of the housing 2 and which levers 27 are integral with the respective retaining members 21, 22. Preferably the retaining members 21, 22 are made from a flexible and resilient material, such as plastic. The levers 27 comprise a connection end 28 that is coupled to the housing 2 in a seat 29. In this manner pushing the pushbutton 26 will make the lever 27 flex so that the notching hook 23 can be displaced. In this manner a predictable and guided movement of the notching hook 23 and pushbutton 26 is guaranteed without the need to provide for a close fitting guide for the pushbutton. As can be seen in the drawing, the lever 27 and the notching hooks 23 of the respective retaining members extend in opposite directions from the pushbutton 26. This may also be different, for example that they extend in the same direction.

An alternative embodiment of the lever 27 is shown in Figure 4, in which it can be seen that the connection end 28 of the lever 27 is now designed as a hinge, around which the lever 27 can pivot. This is indicated in Figure 4 by means of arrows A. In this embodiment it can be beneficial to use a leaf spring as an alternative to a compression spring, whereby such a leaf spring for example extends substantially parallel to the retaining member it is biased against. This is not further detailed in the drawing, however it will be clear to a skilled person how to apply such a leaf spring.

As the retaining members 21, 22 are separate members, which are designed as elongate lever-like elements, the retaining members 21, 22 can be very easily mounted in the housing 2 (or in the tool member 3) when assembling the housing 2. No (plastic) deformation is needed to mount the retaining members 21, 22 in the housing 2. Only some minor deformation of the compression springs 25 is required.

Outward movement in a direction opposite to that as indicated by means of arrow A is limited by means of a stop member 30. Furthermore, the stop member 30 helps in correctly positioning the retaining members 21, 22 when assembling the coupling assembly 20.

In a further embodiment which is not shown in the drawing, means are provided to adjust the bias force of the compression springs 25. This can for example be done by providing an adjustment screw in the outward facing surface of the pushbutton that engages the compression screw 25. In this manner the pressure that needs to be exerted by a user to decouple the tool member 3 from the housing 2 can be adjusted to that user's specific needs.

In Figure 5 the hand blender 1 as shown in Figures 2 and 3 is shown in an alternative configuration. In comparison with the hand blender 1 of Figures 2 and 3, the hand blender 1' of Figure 5 is provided with a single spring loaded retaining member 21' instead of two spring loaded retaining members. The single spring loaded retaining member 21' is of similar design as the first and second spring loaded retaining members 21 and 22. Furthermore, its co-operation with coupling means 24' provided on the tool member 3 is similar as was described with reference to Figures 2 and 3. Hence, the operation of the coupling means 20' of the hand blender 1' of Figure 5 is the same as described with respect to Figures 2-4, apart from the fact that with the hand blender of Figure 5 only one retaining member needs to be operated.

It is further noted that the embodiment of the retaining member as shown in Figure 4 can of course also be used in the embodiment of Figure 5.

Figure 5 further shows in more detail than Figures 2-4 how the compression spring 25 of the retaining member 21' can be housed in an internal space of the pushbutton 26', so as to provide a compression spring that has a maximum length which ensures comfortable operation of the coupling assembly 20'.

The invention has been described in relation to a hand blender, it is to be understood however that the invention is not limited to the examples given, but that these examples are only given to exemplify certain embodiments of the invention. In particular the invention is also applicable to other kitchen appliances wherein tool members can be detachably coupled to a housing part. Examples of such appliances are bar blenders, mixers etcetera.

## Claims

1. A coupling assembly (20) arranged to detachably couple a housing (2) of a hand blender with a tool member (3), the coupling assembly (20) comprising:
- a first (21) and a second (22) spring loaded retaining member, said retaining members (21, 22) each comprising first coupling means (23), whereby said retaining members (21, 22) are provided on one of the housing (2) and the tool member (3), and are moveable with respect thereto between a coupling and non-coupling position by exerting pressure on said retaining members (21, 22), and
- second coupling means (24) complementary with the first coupling means (23) and arranged to establish a coupling with the first coupling means (23), said second coupling means (24) being provided on the other of the housing (2) and the tool member (3),
wherein
said retaining members (21, 22) are separate members which are each spring loaded by a separate spring member (25) so as to be independently moveable with respect to each other.

2. The assembly according to claim 1, wherein the first (23) and second (24) coupling means are complementary lug-and-hole coupling means acting between the housing (2) and the tool member (3).

3. The assembly according to claim 2, wherein the lug-and-hole coupling means of the first coupling means (23) each comprise a notching hook, and wherein the lug-and-hole coupling means of the second coupling means (24) each comprise a notching recess arranged to receive said corresponding notching hook.

4. The assembly according to any of the previous claims, wherein said separate spring members (25) comprise a compression spring.

5. The assembly according to any of the previous claims, wherein the retaining members (21, 22) each comprise a pushbutton (26) that is integrally connected therewith.

6. The assembly according to any of the previous claims, wherein the retaining members (21, 22) each comprise a lever (27) extending in a longitudinal direction thereof, said lever (27) comprising a free connection end (28) that is hingedly connectable to one of the housing (2) and the tool member (3).

7. The assembly according to any of claims 3-6, wherein the lever (27) and the notching hook (23) of the respective retaining member (21, 22) extend in opposite directions from the pushbutton (26) of said respective retaining member (21, 22).

8. The assembly according to any of the previous claims, wherein first (21)and second (22) spring loaded retaining members are provided on the housing (2).

9. The assembly according to claim 8, wherein the retaining members (21, 22) are mounted to the housing (2) in a longitudinal direction of the housing (2).

10. The assembly according to any of the previous claims, wherein the first (21) and second (22) spring loaded retaining members are identical.

11. The assembly according to any of the previous claims, wherein the spring load on the retaining members (21, 22) is adjustable.

12. A kitchen appliance comprising a coupling assembly (20) according to any of the previous claims.

13. A hand blender (1) comprising,
- a housing (2) for housing a drive motor (7), the drive motor (7) being arranged to drive a drive shaft (8), the drive shaft (8) being constructed to engage a drive part of a tool member (3), and
- a coupling assembly (20) arranged to detachably couple the housing (2) to the tool member (3) so as to bring the drive shaft (8) into engagement with the drive part of the tool member (3),
wherein the coupling assembly (20) comprises two separate and independently spring loaded retaining members (21, 22), said retaining members (21, 22) being moveable between a coupling and a non-coupling position by exerting pressure thereon.

14. The hand blender (1) according to claim 13, wherein the retaining members (21, 22) each comprise a lever (27) extending in a longitudinal direction of one of the housing (2) and the tool member (3), said lever (27) comprising a free connection end (28) that is hingedly connectable to one of the housing (2) and the tool member (3).

15. The hand blender (1) according to claim 13 or 14, wherein the retaining members (21, 22) are provided diametrically opposite to each other on one of the housing (2) and the tool member (3).
